# EUROPEAN PATENT APPLICATION

(11) **EP 4 635 358 A1**
(43) Date of publication of application: **22.10.2025**
(21) Application number: 23903117.2
(22) Date of filing: 23.10.2023
(51) Int. Cl.: A43C 19/00, A43B 7/08

(54) **FOOTWEAR**

(30) Priority: 16.12.2022 JP 2022201426; 24.07.2023 JP 2023119642
(71) Applicant: Datamax Corporation, Tokyo 164-0012 (JP)
(72) Inventor: HAYASHI Muneaki, Tokyo 164-0012 (JP)
(74) Representative: London IP Ltd
(86) International application number: PCT/JP2023/038206
(87) International publication number: WO 2024/127818

(57) **Abstract**

To contribute to reduction of carbon dioxide, a force generated when a wearer walks is used.

Footwear 1 that absorbs carbon dioxide as a wearer walks includes an elastic sole portion 3 having elasticity and constituting a bottom surface of the footwear, an intake port 31 disposed in the sole portion, an air chamber 32 disposed in the sole portion and communicating with the intake port, and a carbon dioxide absorption portion 33 communicating with the air chamber to absorb carbon dioxide in air flowing in from the air chamber. The air chamber is compressed by pressure generated in the sole portion as the sole portion strikes the ground during the walking, and the air in the air chamber flows into the carbon dioxide absorption portion.

## Description

### Technical Field

The present invention relates to footwear that absorbs carbon dioxide by particularly using a force generated when a wearer walks or the like.

### Background Art

In recent years, efforts to reduce carbon dioxide emissions worldwide have been attracting attention. However, as a conventional reduction method, there is an example in which large-scale equipment is used to absorb carbon dioxide, which requires a large investment and is difficult for individuals to approach. In addition, in a case where such equipment is used, the carbon dioxide reduction efficiency is not sufficient because the equipment itself discharges carbon dioxide. Therefore, there is a need for a simple configuration that enables even individuals to contribute to reduction of carbon dioxide.

### Citation List

### Patent Literature

Patent Literature 1: JP 2017-528173 A
Patent Literature 2: JP 2015-116286 A
Patent Literature 3: JP 2021-176474 A

### Summary of Invention

### Technical Problem

An object of the present invention is to provide footwear capable of contributing to reduction of carbon dioxide with a simple configuration.

### Solution to Problem

In order to achieve the aforementioned object, footwear according to one aspect of the present invention is footwear that absorbs carbon dioxide as a wearer walks, the footwear including: a sole portion having elasticity and constituting a bottom surface of the footwear; an intake port disposed in the sole portion; an air chamber disposed in the sole portion and communicating with the intake port; and a carbon dioxide absorption portion communicating with the air chamber to absorb carbon dioxide in air flowing in from the air chamber.

The air chamber may be compressed by pressure generated in the sole portion as the sole portion strikes the ground during the walking, and the air in the air chamber flows into the carbon dioxide absorption portion.

The intake port may be bored on a heel side of the sole portion.

The footwear may further include an exhaust port allowing the carbon dioxide absorption portion to communicate with the outside, and the exhaust port may be bored on an inner crotch side in a worn state.

The intake port, the air chamber, the carbon dioxide absorption portion, and the exhaust port may be disposed in this order from a heel side toward a toe side and communicate with each other.

### Advantageous Effects of Invention

According to the present invention, it is possible to contribute to reduction of carbon dioxide with a simple configuration.

### Brief Description of Drawings

Fig. 1 is a view illustrating a first embodiment of footwear according to the present invention, and is a schematic side view illustrating a part of a sole portion in a transparent manner.
Fig. 2 is a schematic bottom view illustrating a part of the sole portion of the footwear in a transparent manner.
Fig. 3 is a schematic rear view of the footwear.
Fig. 4 is a schematic view for explaining a state of a carbon dioxide absorption portion included in the footwear.
Fig. 5 is a view illustrating a first embodiment of a carbon dioxide absorption device according to the present invention.
Fig. 6 is a view illustrating a second embodiment of a carbon dioxide absorption device according to the present invention.
Fig. 7 is a view illustrating a first embodiment of an exercise device according to the present invention.
Fig. 8 is a view illustrating a second embodiment of an exercise device according to the present invention.
Fig. 9 is a view illustrating a third embodiment of an exercise device according to the present invention.
Fig. 10 is a view illustrating a fourth embodiment of an exercise device according to the present invention.
Fig. 11 is a view illustrating a first embodiment of a moving device according to the present invention.
Fig. 12 is a schematic perspective view of a carbon dioxide absorption portion included in the moving device.
Fig. 13 is a view illustrating a first embodiment of clothing according to the present invention.
Fig. 14 is a view illustrating a second embodiment of clothing according to the present invention.

### Description of Embodiments

### • Footwear

Hereinafter, footwear according to an embodiment of the present invention will be described with reference to the drawings.

The footwear according to the present invention absorbs carbon dioxide by using a force generated when a wearer walks or the like. The footwear is mainly worn on people's feet, so-called shoes, and may be any type of shoes such as leather shoes, sneakers, sandals, boots, and galoshes.

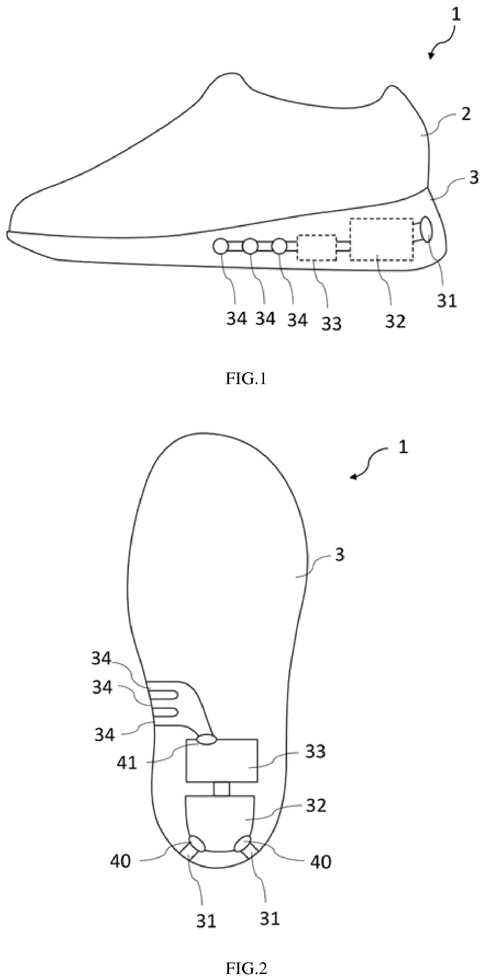

As illustrated in Fig. 1, footwear 1 mainly includes an upper portion 2 and a sole portion 3. The upper portion 2 is a part constituting an upper portion of the footwear 1, and includes an opening into which a wearer's foot is inserted. In the present invention, the upper portion 2 may have any configuration, and an appropriate known technology may be adopted.

As illustrated in Figs. 1 to 3, the sole portion 3 is a part connected to a lower side of the upper portion 2, and constitutes a bottom surface of the footwear 1. The sole portion 3 has elasticity, and is sandwiched and compressed between the upper portion 2 and the ground when the footwear 1 is used, that is, for example, during walking or running.

The sole portion 3 mainly includes an intake port 31, an air chamber 32, a carbon dioxide absorption portion 33, and an exhaust port 34. The intake port 31, the air chamber 32, the carbon dioxide absorption portion 33, and the exhaust port 34 are connected to one another in this order directly or via an appropriate connection path.

The intake port 31 is a hole allowing the air chamber 32 to communicate with the outside. The number of intake ports 31 is two in the present embodiment, but any number of intake ports may be provided. The intake port 31 is bored on a back surface side, that is, a heel side, of the sole portion 3. According to this configuration, as compared with a configuration in which an air intake port is bored on a toe side, dirt such as mud hardly enters the air intake port during walking, making it possible to maintain the air intake function. In addition, in order to exhibit the function, a sneaker is usually formed with the sole portion 3 that is thin on the toe side. In this regard, according to the configuration of the present application, since the intake port 31 is provided on the heel side, the functionality of the sneaker can be maintained even in a case where the footwear 1 is formed into a sneaker shape. In a case where the footwear 1 is formed as a type of shoe with the sole portion 3 that is thick on the toe side such as a leather shoe, the intake port 31 may be provided on the toe side.

The air chamber 32 is a space having a predetermined volume, and communicates with the outside via the intake port 31. A check valve 40 may be disposed between the intake port 31 and the air chamber 32. When the sole portion 3 strikes the ground by walking, the air chamber 32 is compressed by the pressure generated in the sole portion 3. According to the compression, the air in the air chamber 32 flows into the carbon dioxide absorption portion 33. Further, when the footwear 1 leaves the ground by walking, the air chamber 32 is restored to almost its original volume as the sole portion 3 returns to its original state. That is, the air chamber 32 functions as a pump that is repeatedly compressed and restored by walking to send air to the carbon dioxide absorption portion 33.

The carbon dioxide absorption portion 33 is a space communicating with the air chamber 32. The air chamber 32 communicates with a rear end (on the heel side) of the carbon dioxide absorption portion 33. The exhaust port 34 communicates with a front end (on the toe side) of the carbon dioxide absorption portion 33. That is, the air introduced from the intake port 31 passes through the air chamber 32 and the carbon dioxide absorption portion 33 in this order, and is discharged from the exhaust port 34.

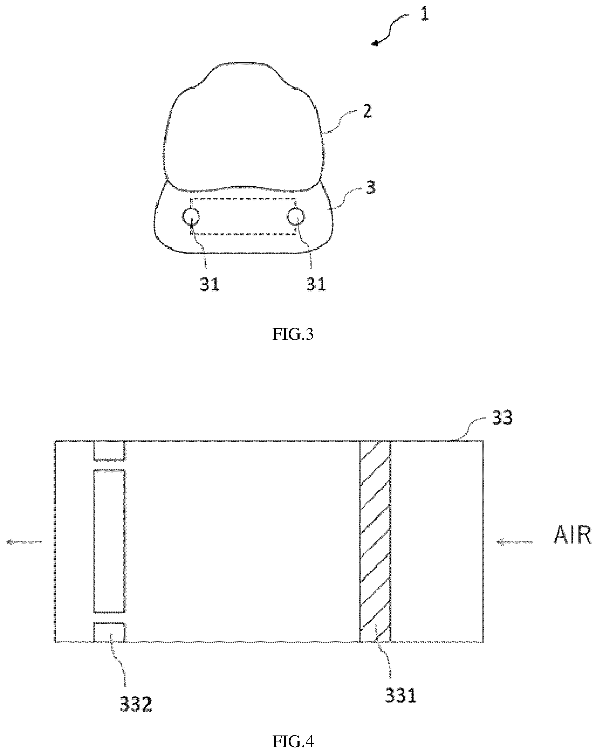

As illustrated in Fig. 4, the carbon dioxide absorption portion 33 includes a carbon dioxide separation membrane 331 and a carbon dioxide absorbent 332. Each of the carbon dioxide separation membrane 331 and the carbon dioxide absorbent 332 is formed across a left-right direction of the carbon dioxide absorption portion 33, with both ends connected to left and right inner walls. That is, the air flowing in from the air chamber 32 necessarily passes through the carbon dioxide separation membrane 331 and the carbon dioxide absorbent 332.

The carbon dioxide separation membrane 331 is a membrane that selectively allows carbon dioxide to permeate therethrough. Air flowing into the carbon dioxide separation membrane 331 from the right side of the drawing is pressed against the carbon dioxide separation membrane 331 by the pressure generated in the sole portion 3 by walking, thereby separating carbon dioxide, and the separated carbon dioxide passes to the left side of the carbon dioxide separation membrane 331.

The carbon dioxide absorbent 332 is made of an appropriate material that absorbs carbon dioxide. The carbon dioxide absorbent 332 absorbs the carbon dioxide that has permeated through the carbon dioxide separation membrane 331. The carbon dioxide absorbent 332 may change in color depending on the amount of carbon dioxide absorbed. In this case, the color of the carbon dioxide absorbent 332 may be visible through an appropriate window disposed in the sole portion 3. According to this configuration, the carbon dioxide absorption function of the footwear 1 can be checked at any time. Furthermore, the carbon dioxide absorbent 332 may be taken out through the window or another appropriate window for replacement.

The gas that has not been absorbed is discharged from the exhaust port 34 communicating with the carbon dioxide absorption portion 33.

The exhaust port 34 is disposed to be closer to the front of the footwear, that is, the toe side, than the intake port 31. When walking, the heel usually strikes the ground first, and the center of gravity of the weight gradually moves forward. Therefore, the air and the carbon dioxide are pressurized successively from the intake port 31 toward the exhaust port 34 due to the shift of the weight during walking. That is, according to this configuration, it is possible to guide the gas from the intake port 31 to the exhaust port 34 using the shift of the weight during walking.

In addition, the exhaust port 34 is bored on an inner crotch side (arch side) of the exterior of the footwear in a worn state. That is, the exhaust ports 34 of the pair of left and right pieces of footwear face each other. According to this configuration, the exhaust port 34 can be maintained in an opened state, while being hardly affected by dirt and mud splashes during walking. As illustrated in Fig. 2, a plurality of exhaust ports 34 may be provided. A valve 41 may be provided at a boundary between the exhaust port 34 and the carbon dioxide absorption portion 33. With this configuration, it is possible to prevent dirt entering from the exhaust port 34 from reaching the carbon dioxide absorption portion 33. The valve 41 may be a check valve that allows gas to flow out only in a direction from the carbon dioxide absorption portion 33 to the exhaust port 34.

The footwear according to the present embodiment described above can contribute to reduction of carbon dioxide with a simple configuration by using a force generated when a wearer walks or the like.

### • Exercise Device (1)

Hereinafter, an exercise device according to an embodiment of the present invention will be described with reference to the drawings.

An exercise device according to the present invention absorbs carbon dioxide by using a force generated according to a movement of a user when the user uses the exercise device.

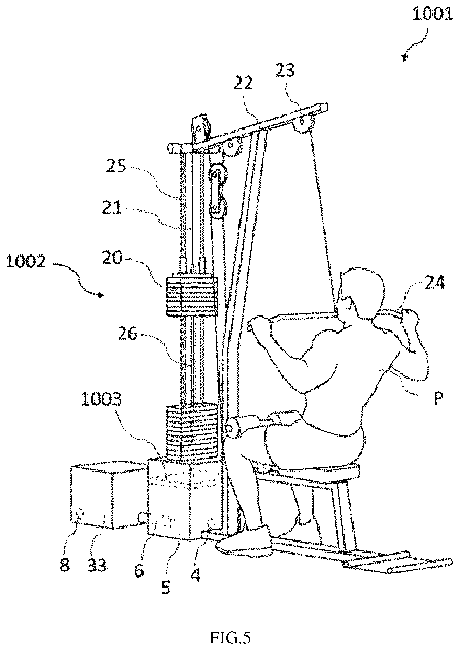

For example, as illustrated in Fig. 5, an exercise device 1001 mainly includes a changing portion 1002, an acting portion 1003, an intake port 4, an air chamber 5, a communication path 6, a carbon dioxide absorption portion 33, an exhaust port 8, and the like.

The changing portion 1002 is a member that changes as a user moves. In the present embodiment, the changing portion 1002 includes at least a weight 20 to be lifted by a user P. An upper end of the weight 20 is connected to one end of a cable 21. The cable 21 is bent from upward to downward via a plurality of pulleys 23 held by a support 22, and a grip portion 24 that can be gripped by the user P is connected to the other end of the cable 21. As a result, when the user P pulls the grip portion 24 obliquely downward, a force is transmitted to the weight 20 via the cable 21, and the weight 20 is lifted. The weight 20 is inserted through a plurality of poles 25 in an appropriate number extending in the vertical direction, and moves up and down along the poles 25. Further, since the weight 20 is biased downward by gravity, when the user P slowly releases the force, the weight 20 moves downward accordingly. That is, in the present embodiment, the change of the changing portion 1002 means that at least the position of the weight 20 moves up and down. By using such an exercise device 1001, the user P can perform muscle strength training by pulling down or relaxing the grip portion 24, thereby applying a load of the weight 20 to back muscles and the like.

The exercise device 1001 according to the present embodiment is a so-called lat pull machine in which the grip portion 24 is suspended obliquely in front of and above the head of the user P, so that muscles are trained by pulling down the grip portion 24. However, the technical scope of the present invention is not limited thereto, and may be any exercise device by which any muscle is trained when the grip portion 24 is pulled to an appropriate posture. Furthermore, in the present embodiment, while the weight 20 is biased by gravity, the user performs muscle strength training by moving the weight 20 against gravity. However, the force for biasing the weight 20 is not limited to gravity, and may be any appropriate force such as an elastic force of a spring or the like. Furthermore, the exercise device that falls within the technical scope of the present invention may be any exercise device including an appropriate member that changes as a user moves, as well as the individually illustrated examples. For example, the exercise device that falls within the technical scope of the present invention may be a so-called leg press that is moved when a user steps on an appropriate changing portion. In addition, the exercise device that falls within the technical scope of the present invention may be a device in which a weight rotates in a roll direction, a pitch direction, a yaw direction, or the like according to a movement of the user P.

Further, the changing portion 1002 includes an abutting portion 26 extending downward from the weight 20. The abutting portion 26 is, for example, a rod-like member, and comes into abutment on the acting portion 1003 at a lower end thereof. The abutting portion 26 abuts on the acting portion 1003 at least when the weight 20 is in a predetermined downward range, and pushes down the acting portion 1003 as the weight 20 moves downward. The abutting portion 26 may be spaced apart from the acting portion 1003 when the weight 20 is located relatively high. In such an aspect, it is preferable to provide an appropriate biasing member that restores the acting portion 1003 to its original posture at least in a state where the weight 20 is spaced apart from the acting portion 1003. Note that, an exercise device according to each embodiment to be described below may similarly include an appropriate biasing member. In addition, the abutting portion 26 may be connected to the acting portion 1003.

In the present embodiment, the abutting portion 26 is a straight rod, and the acting portion 1003 is disposed below the weight 20. However, the abutting portion 26 may be bent. In this case, the acting portion 1003 can be disposed at any position away from and directly below the weight 20 according to the shape of the abutting portion 26.

The acting portion 1003 is a member that moves forward or backward as the changing portion 1002 changes. The acting portion 1003 is, for example, a plate-like member, and is accommodated in the air chamber 5. The acting portion 1003 has a shape corresponding to, for example, a surface orthogonal to a moving direction of the acting portion 1003, among the surfaces of the air chamber 5, and an end side of the acting portion 1003 slides along a side surface of the air chamber 5. The acting portion 1003 compresses air in the air chamber 5 by moving forward and backward in the vertical direction. In the present embodiment, the acting portion 1003 has a shape corresponding to a lower surface of the air chamber 5. In the drawing, the acting portion 1003 has a flat plate shape, but an end thereof may be bent downward.

The intake port 4 is a hole disposed in the air chamber 5 for allowing communication between the inside and the outside of the air chamber 5. The intake port 4 allows air to flow into the air chamber 5 as the acting portion 1003 rises. A check valve may be attached to the intake port 4.

The communication path 6 is a pipe that allows the air chamber 5 and the carbon dioxide absorption portion 33 to communicate with each other. The air compressed by the acting portion 1003 in the air chamber 5 flows into the carbon dioxide absorption portion 33 through the communication path 6.

The carbon dioxide absorption portion 33 is a space having a predetermined volume, and communicates with the air chamber 5 via the communication path 6. A check valve may be disposed between the communication path 6 and the carbon dioxide absorption portion 33. The carbon dioxide absorption portion 33 has the same configuration as the carbon dioxide absorption portion 33 described above.

That is, when the user P pulls the grip portion 24, air flows into the air chamber 5 through the intake port 4. When the user P stops actively pulling the grip portion 24, the weight 20 descends due to gravity, causing the acting portion 1003 to descend, thereby compressing the air inside the air chamber 5. According to the compression, the air in the air chamber 5 flows into the carbon dioxide absorption portion 33. That is, the air chamber 5 functions as a pump that is repeatedly compressed and restored as the user P performs muscle strength training to send air to the carbon dioxide absorption portion 33.

The exercise device according to the present embodiment described above can contribute to reduction of carbon dioxide with a simple configuration by using a force generated as a user moves. In particular, carbon dioxide can be reduced by using a movement made during muscle strength training. According to such an exercise device, a user's own movement directly leads to reduction of carbon dioxide, so that the user can feel his/her contribution.

### • Exercise Device (2)

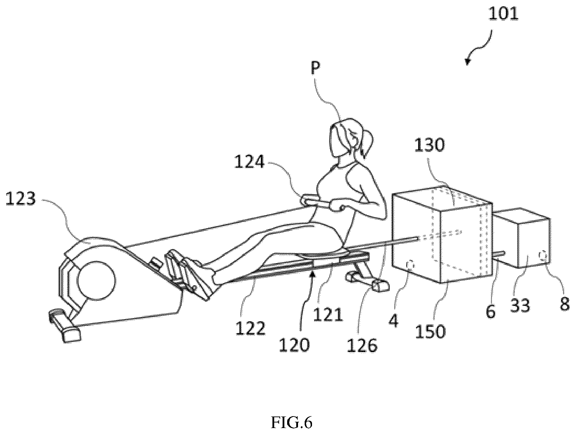

An exercise device 101 illustrated in Fig. 6 is an exercise device according to a second embodiment of the present invention. The exercise device 101 is a device in which a seat on which a user sits slides back and forth together with the user's body as the user bends and stretches, which is a so-called rowing machine. Note that, in the following description, components similar to those of the exercise device 1001 described above will be denoted by the same reference numerals, and description thereof will be omitted. As illustrated in Fig. 6, the exercise device 101 mainly includes a changing portion 120, an acting portion 130, an intake port 4, an air chamber 150, a communication path 6, a carbon dioxide absorption portion 33, an exhaust port 8, and the like.

The changing portion 120 includes a seat 121 for the user P to sit thereon. The seat 121 is held by a rail 122 extending in a direction along the lower limbs of the user P in a state where the user P sits on the seat 121. The seat 121 is coupled so as to be slidable back and forth along the rail 122.

In addition, the exercise device 101 includes a fixed base 123 placed on the floor surface and a grip portion 124 connected to the fixed base 123 by an appropriate cable or the like. An appropriate feet receiving portion on which the soles of the feet of the user P abut is disposed in the fixed base 123. By bending and stretching the legs, the user P receives a reaction force from the feet receiving portion, and moves back and forth together with the seat 121 along the rail 122.

A first end of an abutting portion 126 is connected to the seat 121. The abutting portion 126 is a rod-shaped member extending rearward of the seat 121. A second end of the abutting portion 126 is connected to the acting portion 130 accommodated in the air chamber 150. As a result, when the seat 121 moves forward and backward in accordance with a movement of the user P, the acting portion 130 moves forward and backward inside the air chamber 150. Accordingly, the acting portion 130 compresses the air inside the air chamber 150, causing the air to flow into the carbon dioxide absorption portion 33 via the communication path 6. In the present embodiment, the acting portion 130 is a thin plate having a shape corresponding to a side surface of the air chamber 150, and moves back and forth as the seat 121 moves forward and backward. Note that, similarly to the abutting portion 26 described above, the abutting portion 126 may be bent. In addition, the operation direction of the abutting portion 126 may be converted to the vertical direction by an appropriate gear structure, so that the acting portion 130 move up and down inside the air chamber 150. Such an exercise device 101 can also reduce carbon dioxide in the air by using a force generated by an exercise movement of a user.

### • Exercise Device (3)

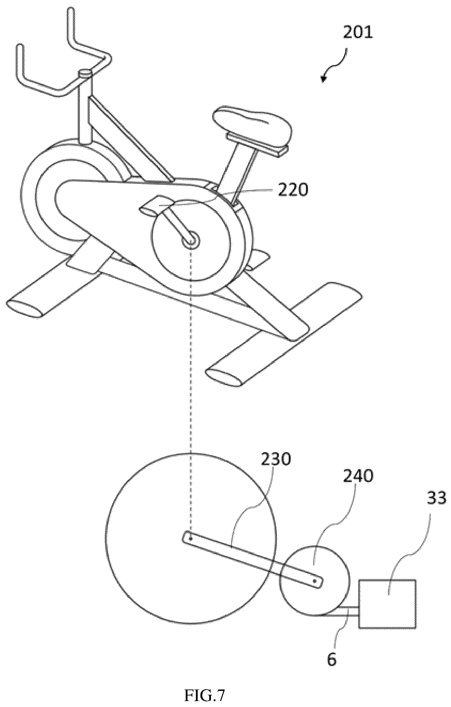

Fig. 7 is a bicycle ergometer, which is an example of an exercise device 201 that absorbs carbon dioxide using a pedaling exercise. The exercise device 201 includes a pedal 220 that is rotated by a movement of a user, and air is blown into the carbon dioxide absorption portion 33 as the pedal 220 is rotated. The pedal 220 is another example of a "changing portion".

The exercise device 201 mainly includes an acting portion 230, a blower 240, and a carbon dioxide absorption portion 33. The acting portion 230 is a member that transmits a rotation of a shaft of the pedal 220 to the blower 240. The blower 240 is a device that blows air to the carbon dioxide absorption portion 33 by rotating blades using a force transmitted from the acting portion 230, and is another example of an "acting portion" in the claims. The carbon dioxide absorption portion 33 has a configuration similar to that of the carbon dioxide absorption portion 33 (see Fig. 4) described above, and the air blown from the blower 240 flows into the carbon dioxide absorption portion 33 via the communication path 6 and is absorbed by the carbon dioxide absorbent 332 (see Fig. 4) inside. With this configuration as well, it is possible to reduce carbon dioxide by using human power without further emitting carbon dioxide caused by power consumption or the like.

### • Exercise Device (4)

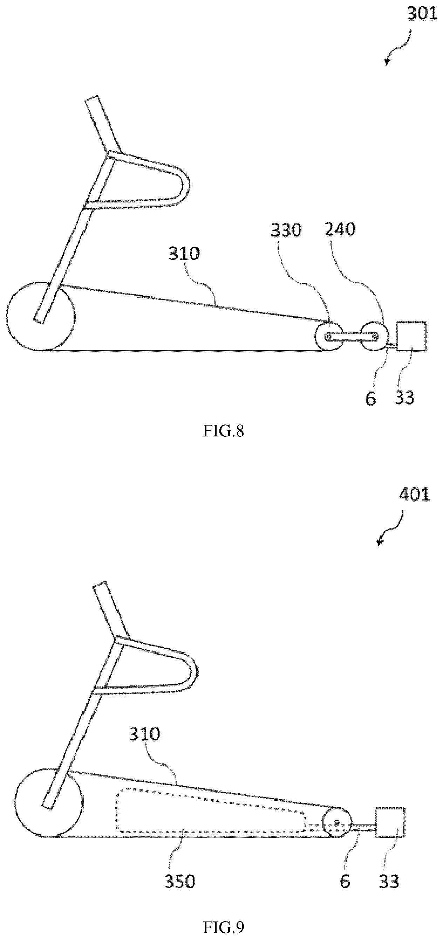

Fig. 8 is a treadmill, which is an example of an exercise device 301 that absorbs carbon dioxide using a force of a user walking or running on an endless belt 310. The exercise device 301 includes an endless belt 310, a roller 330, a blower 240, a communication path 6, a carbon dioxide absorption portion 33, and the like. The endless belt 310 is held by the roller 330 that rotates as the endless belt 310 rotates. The endless belt 310 and the roller 330 rotate according to a movement, particularly walking or running, of a user on the endless belt 310. Any type of movement can be performed as long as the endless belt 310 rotates. The endless belt 310 and the roller 330 are another example of a "changing portion".

According to the above-described configuration, when the user moves on the endless belt 310, the roller 330 rotates, and this rotation causes wind generated from the blower 240 to be blown to the carbon dioxide absorption portion 33 via the communication path 6. That is, carbon dioxide can be reduced using human power from a user.

### • Exercise Device (5)

An exercise device 401 illustrated in Fig. 9 is an exercise device according to a fourth embodiment of the present invention, and is another example of a configuration of a treadmill. The exercise device 401 mainly includes an endless belt 310, an air chamber 350, a communication path 6, and a carbon dioxide absorption portion 33. The carbon dioxide absorption portion 33 has a configuration similar to that of the carbon dioxide absorption portion 33 (see Fig. 2) described above. The air chamber 350 is disposed immediately below the endless belt 310, and is compressed as the user steps on the endless belt 310. Further, the air chamber 350 is at least partially made of a member having an elastic force such as an elastic body, and returns to almost its original shape when the load applied by the user is removed. In the drawing, the air chamber 350 is formed to have a thickness from the floor surface directly below the endless belt 310, but may be formed to be thin in a sheet shape along the endless belt 310. The air chamber 350 is connected to the carbon dioxide absorption portion 33 via the communication path 6. According to such a configuration, when the user performs a movement such as walking or running on the endless belt 310, the air chamber 350 is compressed, and the air in the air chamber 350 is guided to the carbon dioxide absorption portion 33 via the communication path 6. Therefore, carbon dioxide can be reduced by using human power as a user moves.

### • Exercise Device (6)

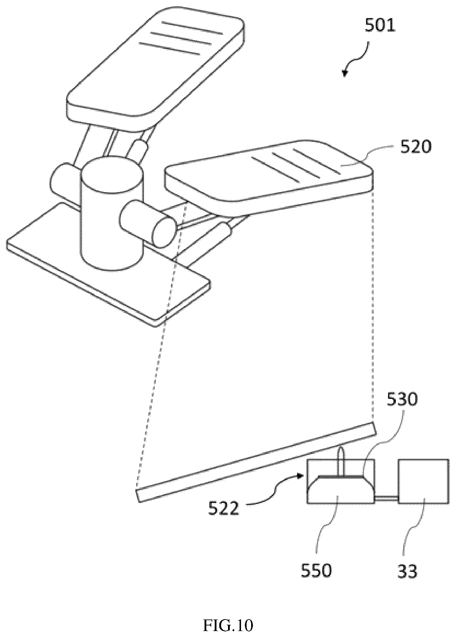

Fig. 10 is an example of an exercise device 501 that absorbs carbon dioxide by using a stepping exercise with a stepping type exercise device called a so-called stepper. The exercise device 501 includes a pedal 520, and the exercise device 501 is operated according to a vertical movement of the pedal 520. The pedal 520 is another example of a "changing portion".

The exercise device 501 mainly includes a bellows 522 and a carbon dioxide absorption portion 33 provided below the pedal 520 of the exercise device 501. The bellows 522 is a general term for instruments each sending out air by changing a volume of an airtight space, and various modes can be adopted as its specific structure as long as the air is compressed by pushing an acting portion 530 so that the air is blown. The acting portion 530 of the bellows 522 has a shape corresponding to a bottom surface of an air chamber 550, and the air in the air chamber 550 is compressed when the acting portion 530 descends. A projection extending upward is formed on an upper surface of the acting portion 530, and the projection comes into abutment on the pedal 520 when descending. That is, the acting portion 530 of the bellows 522 comes into abutment on and is pressed against a back surface of the pedal 520 as the pedal 520 descends. The carbon dioxide absorption portion 33 has a configuration similar to that of the carbon dioxide absorption portion 33 (see Fig. 4), and the air blown from the air chamber 550 of the bellows 522 flows into the carbon dioxide absorption portion 33 and is absorbed by the carbon dioxide absorbent 332 (see Fig. 4) inside. With this configuration as well, it is possible to reduce carbon dioxide by using human power without further emitting carbon dioxide caused by power consumption or the like.

### • Moving Device (1)

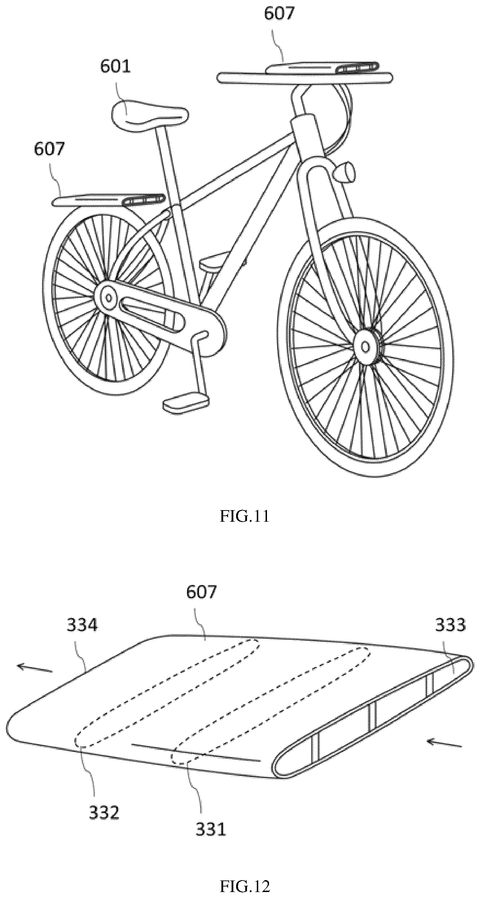

Fig. 11 is an example of a moving device according to the present invention, which is an example of a moving device 601 that absorbs carbon dioxide by allowing air flowing backward from the front as the moving device 601 moves to flow into a carbon dioxide absorption portion 607. The moving device 601 may be an appropriate device that moves using human power, and is a bicycle in the present embodiment. The moving device 601 includes one or more carbon dioxide absorption portions 607. In the drawing, the carbon dioxide absorption portions 607 are disposed on an upper portion of a handle and a cover above a rear wheel, that is, a so-called fender, of the moving device 601, but this is merely an example.

As illustrated in Fig. 12, the carbon dioxide absorption portion 607 is, for example, a flat member having a rectangular shape when viewed from above, and includes an intake port 333 into which air flows and an exhaust port 334 from which air that has passed through the carbon dioxide absorbent 332 flows out. The air flowing in from the intake port 333 passes through the carbon dioxide separation membrane 331 and the carbon dioxide absorbent 332 in this order, and is discharged from the exhaust port 334.

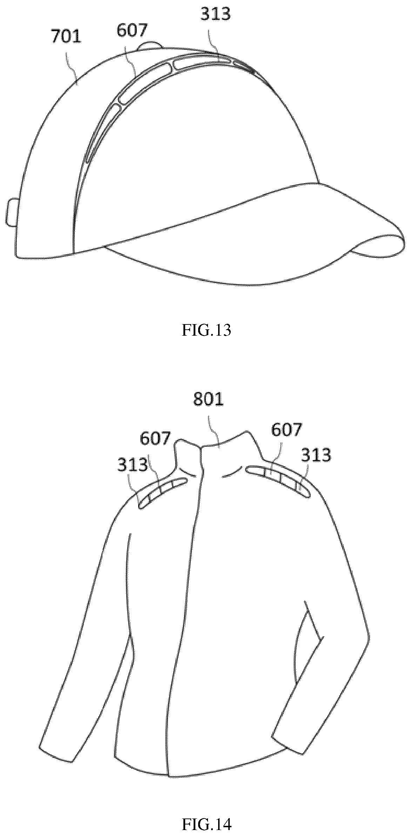

As illustrated in Fig. 13, the intake port 333 of the carbon dioxide absorption portion 607 is disposed to face the progressing direction of the moving device 601. According to such a configuration, air flowing backward from the front as the moving device 601 moves is efficiently guided to the intake port 333. In addition, the intake port 333, the carbon dioxide separation membrane 331, the carbon dioxide absorbent 332, and the exhaust port 334 are formed in this order on a substantially straight line. That is, the carbon dioxide absorbent 332 is disposed to be orthogonal to the progressing direction. In addition, the exhaust port 334 faces the side opposite to the progressing direction of the moving device 601. According to such a configuration, air can be pressed against the carbon dioxide absorbent 332 using a wind force generated when the moving device 601 moves. As a result, carbon dioxide can be more efficiently absorbed.

### • Clothing (1)

Fig. 13 is an example of clothing according to the present invention, which is an example of a hat 701 that absorbs carbon dioxide by allowing air flowing backward from the front as the hat 701 moves to flow into the carbon dioxide absorption portion 607. The carbon dioxide absorption portion 607 disposed in the hat 701 may have a configuration equivalent to that illustrated in Fig. 12. The carbon dioxide absorption portion 607 in Fig. 13 may be curved along the shape of the hat. The intake port 333 of the carbon dioxide absorption portion 607 is disposed to face the front of the hat 701. The front of the hat 701 is directed to the front of the user wearing the hat 701, and faces the progressing direction. The exhaust port (not illustrated) is formed on a back side of the hat 701. When the user goes forward, wind is generated in the hat 701 backward from the front. Therefore, the hat 701 can absorb carbon dioxide as the user is progressing. With this configuration as well, carbon dioxide can be absorbed even when a user wearing the hat 701 is simply walking or running. That is, it is possible to easily contribute to reduction of carbon dioxide by using human power.

### • Clothing (2)

Fig. 14 is another example of clothing according to the present invention, which is an example of a garment 801 that absorbs carbon dioxide by allowing air flowing backward from the front as the garment 801 moves to flow into the carbon dioxide absorption portion 607. The carbon dioxide absorption portion 607 is disposed such that the intake port 333 faces a front side of a shoulder portion of the garment 801. The exhaust port (not illustrated) is formed on a back side of the garment 801. With this configuration as well, since the intake port 333 faces the progressing direction, carbon dioxide can be absorbed as the user is progressing. Ultimately, the user can easily contribute to reduction of carbon dioxide using human power.

Such hats 701 and garments 801 are even more effective when configured as exercise clothes involving vigorous movements. Although it is assumed that the garment 801 is worn on the upper body, the garment 801 may be worn on the lower body.

In addition, in the present description, an example in which the carbon dioxide absorption portion is disposed in the hat or the garment has been described, but the technical idea of the present invention is not limited thereto, and can be applied to any type of clothing or accessory to be worn by a person.

Although the present invention has been described above using embodiments, the technical scope of the present invention is not limited to the scope described above in the embodiments, and various modifications and changes can be made within the scope of the gist of the present invention. For example, in the present description, the configuration for absorbing carbon dioxide has been described as an example, but a configuration for absorbing a greenhouse gas different from carbon dioxide may also be used.

### [Supplementary Note 1]

In order to achieve the aforementioned object, an exercise device according to one aspect of the present invention is an exercise device that absorbs carbon dioxide as a user moves, the exercise device including: a changing portion that changes in accordance with the movement of the user; an acting portion that abuts on the changing portion at least when the changing portion is in a predetermined range, and moves forward and backward as the changing portion changes; and a carbon dioxide absorption portion that absorbs carbon dioxide, in which the acting portion moves forward and backward as the changing portion changes to allow air to flow into the carbon dioxide absorption portion.

### [Supplementary Note 2]

The exercise device according to supplementary note 1, further including an air chamber communicating with the carbon dioxide absorption portion, in which the acting portion moves forward and backward inside the air chamber to compress air inside the air chamber, and cause the air to flow into the carbon dioxide absorption portion.

### [Supplementary Note 3]

The exercise device according to supplementary note 2, in which the changing portion includes a weight to be lifted by the user, the weight is biased downward and moves downward as the user relaxes, and the acting portion moves up and down inside the air chamber as the weight moves up and down to compress air inside the air chamber, and cause the air to flow into the carbon dioxide absorption portion.

### [Supplementary Note 4]

The exercise device according to supplementary note 2, in which the changing portion includes a seat for the user to sit thereon, the exercise device further includes a rail that holds the seat so as to be slidable back and forth, the seat moves back and forth as the user moves, the acting portion is connected to the seat, and the acting portion moves back and forth in the air chamber as the seat moves back and forth to compress air in the air chamber, and cause the air to flow into the carbon dioxide absorption portion.

### [Supplementary Note 5]

The exercise device according to supplementary note 1, in which the changing portion rotates as the user moves, and the acting portion is a blower that rotates as the changing portion rotates, and causes wind generated from the blower to flow into the carbon dioxide absorption portion.

### [Supplementary Note 6]

The exercise device according to supplementary note 5, in which the changing portion includes an endless belt for the user to walk or run thereon, and a roller that holds the endless belt and rotates as the endless belt rotates, the roller is connected to the acting portion, and the acting portion blows air into the carbon dioxide absorption portion as the roller rotates.

### Reference Signs List

- 1: Footwear
- 2: Upper portion
- 3: Sole portion
- 31: Intake port
- 32: Air chamber
- 33: Carbon dioxide absorption portion
- 34: Exhaust port
- 100: Carbon dioxide absorption device
- 1001: Exercise device

## Claims

1. Footwear that absorbs carbon dioxide as a wearer walks, the footwear comprising:
a sole portion having elasticity and constituting a bottom surface of the footwear;
an intake port disposed in the sole portion;
an air chamber disposed in the sole portion and communicating with the intake port; and
a carbon dioxide absorption portion communicating with the air chamber to absorb carbon dioxide in air flowing in from the air chamber.

2. The footwear according to claim 1, wherein
the air chamber is compressed by pressure generated in the sole portion as the sole portion strikes the ground during the walking, and the air in the air chamber flows into the carbon dioxide absorption portion.

3. The footwear according to claim 1, wherein
the intake port is bored on a heel side of the sole portion.

4. The footwear according to claim 1, further comprising:
an exhaust port allowing the carbon dioxide absorption portion to communicate with the outside, wherein
the exhaust port is bored on an inner crotch side in a worn state.

5. The footwear according to claim 4, wherein
the intake port, the air chamber, the carbon dioxide absorption portion, and the exhaust port are disposed in this order from a heel side toward a toe side and communicate with each other.
